(19) Europäisches Patentamt
European Patent Office
Office européen des brevets

(11) EP 1 135 239 B1

(12) # EUROPEAN PATENT SPECIFICATION

(45) Date of publication and mention of the grant of the patent:
**06.02.2008 Bulletin 2008/06**

(21) Application number: **99972963.5**

(22) Date of filing: **30.11.1999**

(51) Int Cl.:
***B27K 3/50*** *(2006.01)* ***A01N 43/88*** *(2006.01)*

(86) International application number:
**PCT/GB1999/003997**

(87) International publication number:
**WO 2000/032371 (08.06.2000 Gazette 2000/23)**

(54) **WOOD PRESERVATIVE FORMULATIONS**

HOLZKONSERVIERUNGSFORMULIERUNG

PREPARATIONS DE PRESERVATION DU BOIS

(84) Designated Contracting States:
**AT BE CH CY DE DK ES FI FR GB GR IE IT LI LU MC NL PT SE**
Designated Extension States:
**LT LV RO**

(30) Priority: **30.11.1998 GB 9826245**

(43) Date of publication of application:
**26.09.2001 Bulletin 2001/39**

(73) Proprietors:
- **HICKSON INTERNATIONAL PLC**
  **Castleford**
  **West Yorkshire WF10 2JT (GB)**
- **Janssen Pharmaceutica NV**
  **2340 Beerse (BE)**

(72) Inventors:
- **WILLIAMS, Gareth**
  **Castleford,**
  **West Yorkshire WF10 2JT (GB)**
- **BACON, Michael**
  **Castleford,**
  **West Yorkshire WF10 2JT (GB)**

(74) Representative: **Gardner, Rebecca Katherine et al**
**Frank B. Dehn & Co.**
**St Bride's House**
**10 Salisbury Square**
**London EC4Y 8JD (GB)**

(56) References cited:
**EP-A- 0 104 940**
**WO-A-95/05739**
**WO-A-95/06043**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 135 239 B1

## Description

This invention relates to preservatives for wood and other materials, in particular to preservative formulations which contain an oxathiazine.

The use of oxathiazines in wood preservation is known (WO 95/06043 of Uniroyal Chemical Company, Inc.). These oxathiazines are most active against the soft rot fungi *Ascomycotina* and *Deuteromycotina.* These organisms are often responsible for significant degradation of wood in practice (Eaton and Hale (1993)).

As with most individual active ingredients, oxathiazines by themselves do not provide protection against all fungi, bacteria, and other microorganisms which it is desirous to protect wood or other materials against. Therefore, WO 95/06043 discusses the possibility of enhancing the spectrum of activity by addition of other active ingredients, binding agents, co-solvents etc.

Organic wood preservative formulations such as those containing oxathiazines are expensive to formulate and manufacture and improvements in their performance against fungi, particularly *Ascomycotina* and *Deuteromycotina,* would therefore be of benefit to the wood preservative industry.

Surprisingly, it has been found that by addition of certain other organic biocides, the efficacy of the oxathiazine-based formulations is significantly increased. In the case of some oxathiazines which have on their own poor efficacy, the addition of other organic biocides results in formulations having excellent efficacy, particularly against *Ascomycotina* and *Deuteromycotina.*

We have found that for an increase in activity of oxathiazine containing formulations against *Ascomycotina* and *Deuteromycotina,* it is not a requirement that the additional organic biocides themselves have good activity against these fungi. A synergistic relationship has been observed, whereby oxathiazines and other organic biocides having individually moderate or poor efficacy against *Ascomycotina* and *Deuteromycotina,* when present together in a formulation provide a highly effective wood preservative agent.

The additional organic biocide is a triazole compound.

According to one aspect therefore, the present invention provides a preservative composition comprising, in synergistic proportions,

(i) an oxathiazine compound of formula (I)

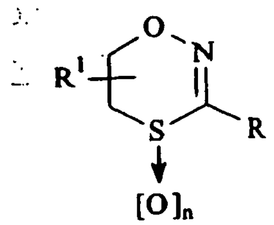

(I)

wherein n is 0, 1 or 2; $R^1$ is hydrogen, $C_1$-$C_4$ linear or branched alkyl, or benzyl; and R is:

(a) phenyl; naphthyl; phenyl substituted with 1 to 3 of the following substituents:

hydroxyl, halo, $C_1$-$C_{12}$ alkyl, $C_5$-$C_6$ cycloalkyl, trihalomethyl, phenyl, $C_1$-$C_5$ alkoxy, $C_1$-$C_5$ alkylthio, tetrahydropyranyloxy, phenoxy, ($C_1$-$C_4$ alkyl) carbonyl, phenylcarbonyl, $C_1$-$C_4$ alkylsulfinyl, $C_1$-$C_4$ alkylsulfonyl, carboxy or its alkali metal salt, ($C_1$-$C_4$ alkoxy)carbonyl, ($C_1$-$C_4$ alkyl)aminocarbonyl, phenylaminocarbonyl, tolylaminocarbonyl, morpholinocarbonyl, amino, nitro, cyano, dioxolanyl, or ($C_1$-$C_4$ alkoxy) iminomethyl;

pyridinyl; thienyl, preferably when n is not 2; furanyl; or thienyl or furanyl substituted with 1 to 3 of the following groups:

alkyl, alkoxy, alkylthio, alkoxycarbonyl, halogen, trihalomethyl, cyano, acetyl, benzoyl, nitro, formyl, alkoxyaminomethyl, phenyl, or phenylaminocarbonyl, wherein the alkyl or alkoxy moiety is $C_1$-$C_4$, linear or branched;

or

(b) 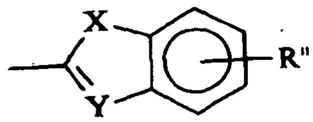

wherein X is oxygen or sulfur; Y is nitrogen, -CH-, or -C($C_1$-$C_4$ alkoxy) -; and R" is hydrogen or $C_1$-$C_4$ alkyl; plus

(ii) a triazole compound selected from compounds of formula (A):

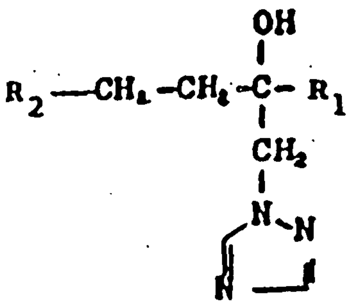

(A)

wherein $R_1$ represents a branched or straight chain $C_{1-5}$ alkyl group and $R_2$ represents a phenyl group optionally substituted by one or more substituents selected from halogen atoms or $C_{1-3}$ alkyl, $C_{1-3}$ alkoxy, phenyl or nitro groups; compounds of formula (B):

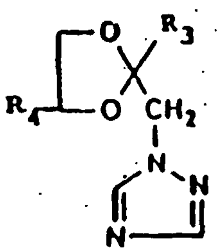

(B)

wherein $R_3$ is as defined for $R_2$ above and $R_4$ represents a hydrogen atom or a branched or straight chain $C_{1-5}$ alkyl group; and cyproconazole, hexaconazole difenaconazole, bromoconazole, epoxiconazole, flusilazole, hexaconazole, metconazole, perconazole, tetraconazole, and triconazole. wherein the weight ratio of the oxathiazine compound to the triazole compound is between 50:1 and 1:2.

Particularly preferred compositions according to the invention further comprise a quaternary ammonium compound.

In a further aspect, the invention provides a method of treating a substrate of wood, composite wood material, cellulosic material, leather, textile material, synthetic fibers, hessian, rope or cordage which comprises applying to the substrate a composition of the invention.

Other materials besides wood which can benefit from treatment with the formulations of the invention include cellulosic material such as cotton. Also, leather, textile materials and even synthetic fibres, hessian, rope and cordage as well as composite wood materials. For convenience, the invention will be described with reference to the treatment of wood but it will be appreciated that other materials may be treated analogously.

The application of these compositions may be by dipping, spraying, brushing or other surface coating means or by high pressure or double vacuum impregnation into the body of the wood or other material, all being techniques well known to the man skilled in the art. Impregnation under pressure is particularly advantageous when the substrate is wood or a wood composite material which is made to become wet during its life, for example, wood for window frames, timber used above ground in exposed environments such as decking and timber used in ground contact or fresh water or salt water environments.

According to a further aspect of the invention there is provided the use of a triazole as defined above to enhance

the activity of an oxathiazine as defined above against *Ascomycotina* and *Deuteromycotina.*

According to a further aspect of the invention there is provided a substrate of wood, composite wood material, cellulosic material, leather, textile material, synthetic fibers, hessian, rope or cordage comprising, in syngergistic proportions, an oxathiazine compound as defined above plus a triazole compound as defined above wherein the weight ratio of the oxathiazine compound to the triazole compound is between 50:1 and 1:2.

Certain compositions according to the invention are particularly advantageous from an environmental point of view, as they provide excellent heavy metal free compositions for protecting wood when it is in contact with soil, as the oxathiazine additionally protects the wood against soil bacteria such as Alcaligenes, Bacillus, Clostridium, Pseudomonas, etc.

Preferably, the compositions are applied to timber components before they are used in construction but they can also be used remedially as a curative action in preventing continued wood degradation or defacement.

Preferably the oxathiazine compound has the formula (II)

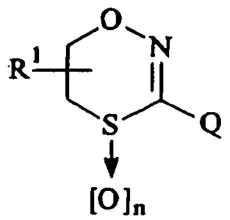

(II)

Wherein n is 0, 1 or 2, $R^1$ is hydrogen, $C_1$-$C_4$ linear or branched alkyl, or benzyl; and Q is:

(a)

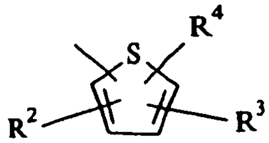

wherein $R^2$, $R^3$ and $R^4$ are, individually, hydrogen, alkyl, alkoxy, alkylthio, alkoxycarbonyl, halogen, trihalomethyl, cyano, acetyl, formyl, benzoyl, nitro, alkoxyaminomethyl, phenyl, or phenylaminocarbonyl, wherein the alkyl or alkoxy moieties are all $C_1$-$C_4$, linear or branched, with the proviso that at least one of $R^2$, $R^3$ or $R^4$ must be other than hydrogen

(b)

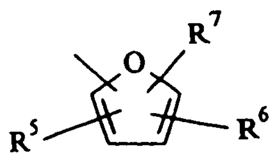

wherein $R^5$, $R^6$ and $R^7$ are, individually, hydrogen, $C_1$-$C_4$ alkoxy, $C_1$-$C_4$ alkylthio, halogen, trihalomethyl, cyano, acetyl, formyl, benzoyl, nitro, phenyl, or phenylaminocarbonyl, with the proviso that at least one of $R^5$, $R^6$ or $R^7$ must be other than hydrogen;

(c)

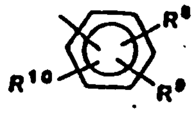

wherein $R^8$, $R^9$ and $R^{10}$ are, individually, hydroxyl, halo, $C_1$-$C_{12}$ alkyl, $C_5$-$C_6$ cycloalkyl, trihalomethyl, phenyl, $C_1$-$C_5$ alkoxy, $C_1$-$C_5$ alkylthio, tetrahydropyranyloxy, phenoxy, ($C_1$-$C_4$ alkyl) carbonyl, phenylcarbonyl, $C_1$-$C_4$ alkylsulfinyl, $C_1$-$C_4$ alkylsulfonyl, carboxy or its alkali metal salt, ($C_1$-$C_4$ alkoxy)carbonyl, ($C_1$-$C_4$ alkyl)aminocarbonyl, phenylaminocarbonyl, tolylaminocarbonyl, morpholinocarbonyl, amino, nitro, cyano, dioxolanyl, or ($C_1$-$C_4$ alkoxy)iminomethyl; or

(d)

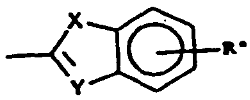

wherein X is oxygen or sulfur; Y is nitrogen, -CH-, or -C($C_1$-$C_4$ alkoxy) -; and R" is hydrogen or $C_1$-$C_4$ alkyl

More preferably, the oxathiazine is a compound of formula II wherein

$R^1$ is hydrogen or $C_1$-$C_4$ alkyl; n is 1 or 2;

$R^2$, $R^3$ and $R^4$ are, individually, hydrogen, $C_1$-$C_4$ alkyl, halo, ($C_1$-$C_4$ alkoxy)-carbonyl, or cyano, with the proviso that at least one of $R^2$, $R^3$ and $R^4$ must be other than hydrogen;

$R^5$, $R^6$ and $R^7$ are, individually, hydrogen, halo or cyano, with the proviso that at least one of $R^5$, $R^6$ and $R^7$ must be other than hydrogen;

$R^8$, $R^9$ and $R^{10}$ are $C_1$-$C_4$ alkyl, $C_1$-$C_4$ alkoxy, nitro, halo, trihalomethyl, or ($C_1$-$C_4$ alkoxy)-carbonyl ; X is sulfur; and R" is hydrogen.

More preferred are those compounds of formula (II) wherein $R^1$ is hydrogen; n is 1 or 2;

$R^2$, $R^3$ and $R^4$ are, individually, hydrogen, methyl, ethyl, bromo, chloro, ethyl carboxylate, or cyano, with the proviso that at least one of $R^2$, $R^3$ and $R^4$ must be other than hydrogen;

$R^5$, $R^6$ and $R^7$ are, individually, hydrogen, bromo, chloro, or cyano, with the proviso that at least one of $R^5$, $R^6$ and $R^7$ must be other than hydrogen;

$R^8$, $R^9$ and $R^{10}$ are methyl, ethyl, nitro, fluoro, chloro, or trifluoromethyl.

The most preferred oxathiazine compounds for use in the compositions and methods of the present invention are 3-(benzo[b]thien-2-yl)-5,6-dihydro-1,4,2-oxathiazine 4-oxide, hereinafter referred to as bethoxazin and 5,6-dihydro-3-(2-thienyl)-1,4,2-oxathiazine, 4-oxide,

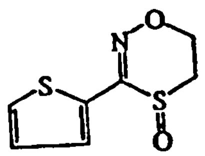

A particularly preferred compound of formula (A) is tebuconazole:

alpha-[2-(4-chlorophenyl)ethyl]-alpha(1,1-dimethylethyl)-1H-1,2,4-triazole-1-ethanol.

When the triazole compound is a compound of formula (B) as defined above, $R_4$ may be n-propyl.

Particularly preferred triazole compounds of this type are: propiconazole (1-[[2-(2-4-dichlorophenyl)-4-propyl-1,3-dioxolan-2-yl]methyl]-1H-1,2,4-triazole) and azaconazole (1-[[2,4-dichlorophenyl)-1,3-dioxolan-2-yl]methyl]-1H-1,2,4-triazole. Other triazoles which could be used include hexaconazole ((RS)-2-(2,4-dichlorophenyl)-1-(1H-1,2,4-triazol-1-yl)hexan-2-ol) difenaconazole, cyproconazole ((2RS,3RS; 2RS, 3SR)-2-(4-chlorophenyl)-3-cyclopropyl-1-(1H-1,2,4-triazol-1-yl)butan-2-ol), bromuconazole (1-[4-bromo-2-(2,4-dichloro-phenyl)tetrahydrofurfuryl]-1*H*-1,2,4-triazole),

epoxiconazole (1-[3-(2-chlorophenyl)-2-(4-fluorophenyl)oxiran-2-ylmethyl]-1H-1,2,4-triazole), metconazole (5-[(4-chlorophenyl)-methyl]-2,2-dimethyl-1-(1*H*-1,2,4-triazol-1-ylmethyl)cyclopentanol), and triticonazole ((E)-5-(4-chloro-phenyl) methylene)-2,2-dimethyl-1-(1*H*-1,2,4-triazol-1-ylmethyl)-cyclopentanol), fenbuconazole, flusilazole, tetraconazole and penconazole

Compositions according to the invention may contain more than one triazole compound, for example, they may contain two or more triazoles selected from tebuconazole, propiconazole, azaconazole and cyproconazole, such as tebuconazole and propiconazole, tebuconazole and cyproconazole or a mixture of tebuconazole, propiconazole and azaconazole.

Of the quaternary ammonium compounds which may be used in the compositions and methods of the present invention, suitable compounds include:

1. Monoalkyltrimethyl ammonium salts of formula (III):

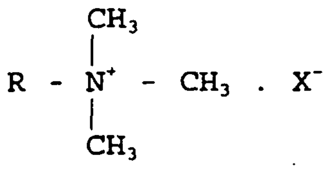

(III)

wherein R is an alkyl group having between 6 and 18 carbon atoms, preferably between 12 and 14 carbon atoms and $X^-$ is an anion chosen to allow ready water solubility of the quaternary ammonium salt. Examples being : chloride, bromide, sulphate, acetate, propionate, lactate, citrate, methosulphate and carbonate.
Preferred examples include Cocotrimethyl ammonium chloride in which the alkyl group R consists of a mixture of predominantly $C_{12}$ and $C_{14}$.

2. Dialkyl dimethyl ammonium salts of formula (IV):

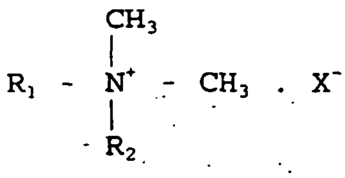

(IV)

wherein $R_1$ and $R_2$ are alkyl groups which may be the same or different and which contain between 6 and 18 carbon atoms, preferably between 8 and 10 carbon atoms and X- is an anion of the type previously described.
Preferred examples include Didecyl dimethyl ammonium chloride, dioctyl dimethyl ammonium chloride and octyl decyl dimethyl ammonium chloride either individually or as a mixture containing two or three of these.

3. Alkyl dimethyl benzyl ammonium salts and dialkyl methyl benzyl ammonium salts of formulae (V) or (VI).

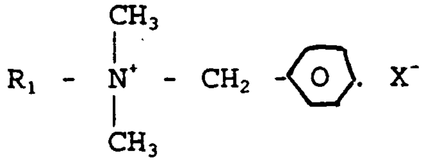

(V)

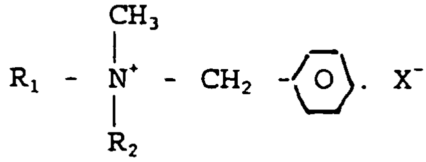

(VI)

wherein $R_1$ and $R_2$ are alkyl groups which can be the same or different and which contain between 6 and 18 carbon atoms, preferably between 8 and 10 carbon atoms in a dialkyl compound and between 10 and 14 carbon atoms in a monoalkyl compound and $X^-$ is an anion of the type previously described.
Preferred examples include Coco benzyl dimethyl ammonium chloride and dicoco benzyl methyl ammonium chloride

in which the alkyl groups are predominantly $C_{12}$ and $C_{14}$.

4. Alkyl and dialkyl oxyethylene methyl ammonium salts of formulai (VII) or (VIII):

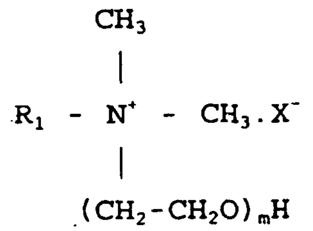
(VII)

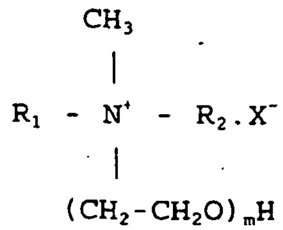
(VIII)

wherein $R_1$ and $R_2$ are alkyl groups which may be the same or different and which contain between 6 and 18 carbon atoms, preferably between 8 and 10 carbon atoms in a dialkyl compound and between 10 and 14 carbon atoms in a monoalkyl compound, most preferably 10 carbon atoms. m is a number between 1 and 20 typically between 1 and 8, preferably between 3 and 5. $X^-$ is an anion of the type previously described, preferably propionate or lactate. Preferred examples include N,N-didecyl-N-methyl-poly(oxyethyl) ammonium propionate (Bardap 26) or N,N-didecyl-N-methyl-poly(oxyethyl) ammonium lactate.

5. Polymeric quaternary ammonium compounds in which active quaternary ammonium compounds are chemically grafted to a polymer backbone.

Compositions containing quaternary ammonium compounds can form micro-emulsions which are particularly useful in the treatment of timber. In addition, the presence of these compounds means that additional organic solvents may not be necessary to solubilise the triazole compound if such a compound is also present in the formulation. The inclusion of quaternary ammonium compounds may also improve penetration of the triazole compound into the timber.

The optimum weight ratio of the oxathiazine compound to the other organic biocide varies depending on the particular material to when the composition is applied, the type of organism against which protection is required and the precise conditions to which the treated material will be exposed. Preferably, the weight ratio of oxathiazine compound to quaternary ammonium compound should be between 100:1 and 1:100 or 50:1 and 1:50, more preferably between 20:1 and 1:20 or 5:1 and 1:10, typically between 2:1 and 1:5. In certain preferred formulations according to the invention, the quarternary ammonium compounds will be present in excess of the oxathiazine or triazole compound. The triazole and oxathiazine compound may be present in about equal amounts (e.g. 2:1 to 1:2 on a weight basis) and at least as much quarternary ammonium compound may be present, either as much as one of the other ingredients or as much as both of them together. For example, the ratio of quaternary ammonium compound to oxathiazine may advantageously be 1:1 to 8:1 preferably 2:1 to 5:1 on a w/w basis.

The concentration of the formulation required for preservative treatment depends on the ratio of oxathiazine to triazole compound selected, the method of treatment employed, the timber species, the level of protection required and the nature and quantity of any other biocides present. The amounts necessary can be determined readily by one skilled in the art. In general, the amount of oxathiazine will be in the range 0.01-1.0 $kgm^{-3}$, the amount of triazole in the range 0.1-10.0 $kgm^{-3}$ and, if present, the amount of quaternary ammonium compound will be in the range 0.1-10.0 $kgm^{-3}$; all values are expressed as the weight per unit volume of wood treated.

Conveniently, the compositions of the present invention are applied as a liquid composition, preferably by high pressure impregnation. They may also be applied as a solid implant or paste. Preferably, when applied in liquid form, this is in an aqueous solution, but one or more organic solvents or a mixture of water and an organic solvent could also be used. Suitable organic solvents include both aromatic and aliphatic hydrocarbon solvents such as white spirit, petroleum distillate, kerosene, diesel oils and naphthas. Also, benzyl alcohol, 2-phenoxy ethanol, methyl carbitol, propylene carbonate, benzyl benzoate, ethyl lactate and 2-ethyl hexyl lactate. Formulations can be prepared as concentrates intended to be diluted at the treatment facility, or the formulations can be prepared in the form of dilute treatment solutions.

The compositions according to the invention may additionally, comprise other active ingredients such as termiticides, insecticides, bacteriocides and other fungicides. Suitable additional fungicides would be apparent to one skilled in the art and will vary according to the application. In particular, additional fungicides which extend the spectrum of activity of the formulation may be chosen, such as fungicides active against bluestain fungi, white rots, brown rots, dry rots and moulds. Suitable additional fungicides include for example, dichlofluanid, acypetacs, imazalil, IPBC, isothiazolones, tolylfluanid, chlorothalonil, benzimadazoles, as well as metal compounds such as copper, Cu-oxide and Cu-HDO, also iron and zinc and salts, compounds and soaps thereof. Suitable insecticides would also be apparent to the skilled man depending upon the intended application, and include, for example, chlorpyrifos, cypermethrin, fenvalerate,

fipronil, farox, teramethrin, isofenphos, permethrin, silafluofen, deltamethrin, bifenthrin, cyfluthrin and imidacloprid, and benzoylureas such as lufenuron, hexaflumuron and flufenoxuron and in particular, flurox.

The compositions according to the invention may additionally comprise other components which may act to improve the characteristics of the wood treated with these biocides. Such compounds could include water repellents based on waxes, silicones and polysiloxanes, latex, fluorocarbon, organic carboxylate/metals, paper sizing agents or amine oxides, or combinations thereof; crosslinking agents based on alkyds, acrylics, polyurethanes, formaldehydes, dimethylol, and epichlorohydrin or combinations thereof. Oils may also be used as may UV absorbers, corrosion inhibitors and defoamers.

The following non-limiting Examples further illustrate the invention.

A: Examples of formulations according to the invention for use in the preservation of wood and other materials

Those formulations which do not contain water are preferably made by weighing together all the components and blending to produce clear homogenous systems. Heating to not above 50°C may be necessary to ensure rapid dissolution of the solid active components in the solvents. Alternative methods of manufacture are possible such as solubilising the active components in water with surfactants.

Oil in water emulsions or micro-emulsions of these formulations can be prepared by adding the concentrates prepared as above to water at room temperature with good agitation to ensure proper dispersion. Emulsions containing any desired level of active component can be prepared in this way.

Those formulations containing water are formed into concentrated emulsions by taking firstly the non water containing components and blending them as for the anhydrous formulations. The required water is then added to the other components after the temperature has been allowed to return to ambient with efficient stirring to produce the concentrated emulsion. These emulsions can later be diluted to the required strength simply by adding to more water with mixing to produce diluted emulsions.

In the following Examples, Bardap 26 refers to N,N-didecyl-N-methyl-poly(oxyethyl) ammonium propionate. In all cases, the Bardap 26 preparation contains 70% of active ingredient.

Example 1

BARDAP 26/BETHOXAZIN/CYPROCONAZOLE 10:2:1

| | % w/w |
|---|---|
| Bardap 26 | 14.29 |
| Bethoxazin | 2.00 |
| Cyproconazole | 1.00 |
| Methyl diethoxol | 66.71 |
| Nonylphenol 12EO | 16.00 |

Example 2

BETHOXAZIN/CYPROCONAZOLE 2:1

| | % w/w |
|---|---|
| Bethoxazin | 1.334 |
| Cyproconazole | 0.666 |
| Methyl diethoxol | 18.000 |
| Dowanol PnB | 10.000 |
| Mineral oil | 60.000 |
| Tridecanol 10EO | 10.000 |

Example 3

BARDAP 26/BETHOXAZIN/TEBUCONAZOLE/PROPICONAZOLE

10:2:0.5:0.5

| | % w/w |
|---|---|
| Bardap 26 | 14.29 |
| Bethoxazin | 2.00 |
| Tebuconazole | 0.72 |
| Propiconazole | 0.72 |
| Butyl glycollate | 15.35 |
| Dioctyl phthalate | 46.92 |
| Nonyl phenol 9EO | 20.00 |

Example 4 (Reference)

BARDAP 26/BETHOXAZIN 10:2

| | % w/w |
|---|---|
| Bardap 26 | 14.29 |
| Bethoxazin | 2.00 |
| Dowanol DPM | 21.79 |
| Aromatic solvent | 44.42 |
| Castor oil 65EO | 17.5 |

Example 5

BETHOXAZIN/TEBUCONAZOLE/PROPICONAZOLE 2: 1: 1

| | % w/w |
|---|---|
| Bethoxazin | 2.50 |
| Tebuconazole | 1.25 |
| Propiconazole | 1.25 |
| Benzyl alcohol | 14.60 |
| Methyl octoate | 58.40 |
| Castor oil 40EO | 22.00 |

Example 6

BETHOXAZIN/TEBUCANOZOLE 2:1

| | % w/w |
|---|---|
| Bethoxazin | 3.33 |
| Tebuconazole | 1.67 |

(continued)

| | % w/w |
|---|---|
| Butyl glycollate | 23.10 |
| Dioctyl phthalate | 53.90 |
| Nonylphenol 12EO | 18.00 |

Example 7 (Reference)

BARDAP 26/BETHOXAZIN/IRON 10:2:1

| | % w/w |
|---|---|
| Bardap 26 | 14.29 |
| Bethoxazin | 2.00 |
| Iron naphthenate* | 10.00 |
| Oleyl alcohol 5EO | 5.00 |
| Oleyl alcohol 10EO | 7.50 |
| Dowanol PnB | 15.00 |
| Mineral oil | 46.21 |

* Iron naphthenate in solvent containing 10.00% w/w iron metal

Example 8 (Reference)

BARDAP 26/BETHOXAZIN/IRON 10:2:1

Using complexed iron compound

| | % w/w |
|---|---|
| Bardap 26 | 14.29 |
| Bethoxazin | 2.00 |
| Iron EDTA* | 11.11 |
| Butyl glycollate | 23.36 |
| Tridecanol 15EO | 12.50 |
| Water | 36.74 |

* Contains 9.0% w/w iron metal

Example 9

BARDAP 26/BETHOXAZIN/CYPROCONAZOLE/COPPER 10:2:1:1

| | % w/w |
|---|---|
| Bardap 26 | 7.15 |
| Bethoxazin | 1.00 |
| Cyproconazole | 0.50 |

(continued)

| | % w/w |
|---|---|
| Copper gluconate* | 3.57 |
| Methyl diethoxol | 14.50 |
| Dowanol PnB | 25.65 |
| Tridecanol 13EO | 15.00 |
| Water | 32.63 |

* Contains 14% copper metal

Example 10

BARDAP 26/HETHOXAZIN/Cyproconazole 10:2:1 plus Flurox

| | % w/w |
|---|---|
| Bardap 26 | 14.28 |
| Bethoxazin | 2.00 |
| Cyproconazole | 1.00 |
| Flurox | 1.00 |
| Methyl diethoxol | 65.71 |
| Nonyl phenol 12EO | 16.00 |

Example 11 (Reference)

BARDAP 26/BETHOXAZIN + Farox 10:2 plus Farox

| | % w/w |
|---|---|
| Bardap 26 | 14.28 |
| Bethoxazin | 2.00 |
| Farox | 1.50 |
| Dowanol DPM | 21.29 |
| Aromatic solvent | 43.42 |
| Castor oil 65EO | 17.51 |

Example 12

BETHOXAZIN/Tebuconazole 2:1 + Cypermethrin

| | % w/w |
|---|---|
| Bethoxazin | 3.33 |
| Tebuconazole | 1.67 |
| Cypermethrin | 2.00 |
| Butyl glycolate | 22.10 |
| Dioctyl phthalate | 52.90 |
| Nonyl phenol 12EO | 18.00 |

Example 13 (Reference)

Bardap 26/BETHOXAZIN/Iron 10:2:1 + Cyfluthrin

| | % w/w |
|---|---|
| Bardap 26 | 14 29 |
| Bethoxazin | 2.00 |
| Cyfluthrin | 1.00 |
| Iron EDTA* | 11.11 |
| Butyl glycolate | 22.86 |
| Tridecanol E015 | 12.00 |
| Water | 36.74 |

* contains 9% w/w iron metal.

Example 14

BARDAP 26/BETHOXAZIN/TEBUCONAZOLE/PROPICONAZOLE

10:2:0.5:0.5

| | % w/w |
|---|---|
| Bardap 26 | 14.29 |
| Bethoxazin | 2.00 |
| Tebuconazole | 0.5 |
| Propiconazole | 0.5 |
| Butyl glycollate | 15.79 |
| Dioctyl phthalate | 46.92 |
| Nonyl phenol 9EO | 20.00 |

Synergistic action of mixtures formulated according to the invention

The toxic limit value for a particular biocidal compound is the concentration of the compound which is required to prevent degradation (defined as >3% mass loss) of a substrate by a target organism. Toxic limits are normally expressed as two experimentally-determined concentrations that span the pass/fail point of the test. -The toxic index is the midpoint of these two values. Where a preservative composition contains two biocidal compounds at a particular ratio, the toxic index is the estimated minimum concentration of each biocide required for effective protection of the substrate from the target organism. In Figure 1 of the accompanying drawings, points A and B are the toxic index values for biocidal compounds Y and X respectively and the straight line between these two points illustrates the toxic index values which would be obtained if the biocidal effects of compounds X and Y are merely additive. If, for any particular ratio of X:Y, the toxic index value is found to be below the straight line (e.g. at point C), then compounds X and Y are synergistic at that particular ratio.

A convenient method of assessing the synergistic properties of a formulation is to use a 'synergistic index'. This may be defined as:

$$\text{Synergistic Index (SI)} = \frac{\text{Theoretical toxic index}}{\text{Actual toxic index}}$$

The theoretical toxic index may be calculated by interpolation to the theoretical line of action. A SI of 1 indicates no synergism. As the SI increases, so the degree of synergism also increases.

B: Wood Preservative Efficacy

Testing was carried out to determine the performance of active ingredients alone and in mixture using a soft rot soil burial method. The method used is similar to that described by the European pre-standard ENV-807 and challenges the treated wood in a wet soil environment to soft rot fungi belonging to the groups *Ascomycotina* and *Deuteromycotina.*

Beech *(Fagus sylvatica)* blocks measuring 5 x 15 x 30 mm were prepared from local grown, seasoned, knot-free sapwood. After oven drying and weighing, the blocks were vacuum impregnated (in groups of 6 replicates) with retentions of the test preservatives which had been freshly prepared using deionised water as the diluent.

The following preservative combinations were tested:

Bethoxazin/Propiconazole (1:1)
Bethoxazin/Propiconazole/Tebuconazole (2:1:1)
Bethoxazin/Bardap 26 (1:5)
Bethoxazin/Bardap 26/Cyproconazole (2:10:1)

After treatment, the blocks were covered with polythene for a period of one week to reduce the drying rate and allow any fixation reactions to occur. They were then fully ventilated by standing on the laboratory bench for 2 weeks and allowed to dry.

Each series of blocks was then exposed in John Innes (No. 2) compost, previously wetted to 110% of water holding capacity using deionised water. The test systems were then incubated for 14 weeks at 28°C.

Following incubation, blocks were removed from the soil, gently rinsed in clean water and then oven dried and re-weighed.

Preservative retention and weight change data were calculated for each block and the results expressed as toxic limit values according to the criteria laid down in the test method EN113.

Results of Efficacy Testing

The results of the efficacy tests are given in the following table and expressed as toxic limit values in $kgm^{-3}$ active ingredient retention.

**Table 1**

| Results of Soil Testing with Organic Biocides | |
|---|---|
| Fungicide | Toxic Limit Value ($kgm^{-3}$) |
| Tebuconazole | > 7.0 |
| Propiconazole | > 7.0 |
| Bethoxazin | > 0.77 |
| Bethoxazin/Propiconazole (1:1) | 0.65-0.74 |
| Bethoxazin/Propiconazole/ Tebuconazole (2:1:1) | 0.15-0.32 |
| *Bethoxazin/Bardap 26 (1:5) | 0.54-1.11 |
| Bardap 26 | > 6.2 |
| Bardap 26/Bethoxazin/ Cyproconazole (10:2:1) | 0.58-1.18 |
| * not a formulation of the invention | |

A Toxic Limit Value of >7.0$kgm^{-3}$ indicates that at the concentrations tested, the highest of which was 7.0$kgm^{-3}$, no effective protection of the wood was achieved.

Using the conventions of EN113, the following toxic limit values are expressed as individual active ingredients and mixtures. Therefore, taking tebuconazole as an example, the table below shows that the amount of tebuconazole required for effective preservation dropped from >7$kgm^{-3}$ when applied on its own to 0.08$kgm^{-3}$ when it was part of a Bethoxazin/ Propiconazole/Tebuconazole mixture.

**Table 2**

| Fungicide | Effective Retention of | | | | | |
|---|---|---|---|---|---|---|
| | Tebuconazole | Cyproconazole | Propiconazole | Bethoxazin | Bardap 26 | Mixture |
| Bethoxazin | - | | - | > 0.77 | - | - |
| Tebuconazole | > 7.0 | | - | - | - | - |
| Cyproconazole | - | 1.25 | - | - | - | - |
| Propiconazole | - | | > 7.0 | - | - | - |
| Bethoxazin/ Propiconazole | - | | 0.345 | 0.345 | - | 0.69 |
| Bethoxazin/ Propiconazole/ Tebuconazole | 0.8 | | 0.08 | 0.16 | - | 0.32 |
| Bethoxazin/Bardap 26 | - | | - | 0.185 | 0.925 | 1.11 |
| Bardap 26 | - | | - | - | >6.2 | - |
| Bardap/Bethoxazin/ Cyproconazole | - | 0.068 | - | 0.14 | 0.68 | 0.88 |

Where the lower toxic limit value provides a weight loss of 10% m/m or greater, then the upper toxic limit value has been used to indicate the probable effective retention of preservative; this is in accordance with EN113.

From this data, it can be seen that combinations of these organic biocides with Bethoxazin provide a significant enhancement in preserving ability towards microfungi that attack wood in contact with soil. The oxathiazine and the triazole compound work synergistically to protect the wood substrate from fungal attack.

The results have been plotted in Figures 2, 3, 4 and 5 which show expected effect of combining the various biocides at the ratios tested with the actual results obtained for the combinations of biocides.

A further demonstration of synergism can be derived by calculating a synergistic index value (SI) as described above. This compares the toxic threshold obtained in the test (Table 3) with the theoretical values which can be derived from Figures 2-5.

These results are provided in the following table.

**Table 3**

| Formulation | Toxic threshold value (kgm$^{-3}$ ai) | Theoretical value (kgm$^{-3}$ ai) | Synergistic Index (SI) |
|---|---|---|---|
| Bethoxazin/ Propiconazole (1:1) | 0.69 | 1.4 | 2.03 |
| Bethoxazin/Propiconazole/ Tebuconazole (2:1:1) | 0.32 | 1.4 | 4.37 |
| *Bethoxazin/Bardap 26 (1:5) | 1.11 | 2.7 | 2.43 |
| Bardop 26/Bethoxazin/ Cyproconazole | 0.89 | 1.065 | 1.20 |
| * not a formulation of the invention | | | |

These values clearly show significant synergism at the ratios tested. In the case of the 3-way combination, some additional synergy is noted over and above that derived from either a combination of Bethoxazin plus azole or Bethoxazin plus Bardap 26.

## Claims

**1.** A preservative composition comprising, in synergistic proportions,

(i) an oxathiazine compound of formula (I)

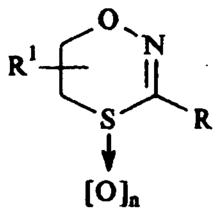

(I)

wherein n is 0, 1 or 2; $R^1$ is hydrogen, $C_1$-$C_4$ linear or branched alkyl, or benzyl; and
R is:

(a) phenyl; naphthyl; phenyl substituted with 1 to 3 of the following substituents:

hydroxyl, halo, $C_1$-$C_{12}$ alkyl, $C_5$-$C_6$ cycloalkyl, trihalomethyl, phenyl, $C_1$-$C_5$ alkoxy, $C_1$-$C_5$ alkylthio, tetrahydropyranyloxy, phenoxy, ($C_1$-$C_4$ alkyl)carbonyl, phenylcarbonyl, $C_1$-$C_4$ alkylsulfinyl, $C_1$-$C_4$ alkylsulfonyl, carboxy or its alkali metal salt, ($C_1$-$C_4$ alkoxy) carbonyl, ($C_1$-$C_4$ alkyl)aminocarbonyl, phenylaminocarbonyl, tolylaminocarbonyl, morpholinocarbonyl, amino, nitro, cyano, dioxolanyl, or ($C_1$-$C_4$ alkoxy)iminomethyl;

pyridinyl; thienyl, preferably when n is not 2; furanyl; or thienyl or furanyl substituted with 1 to 3 of the following groups:

alkyl, alkoxy, alkylthio, alkoxycarbonyl, halogen, trihalomethyl, cyano, acetyl, benzoyl, nitro, formyl, alkoxyaminomethyl, phenyl, or phenylaminocarbonyl, wherein the alkyl or alkoxy moiety is $C_1$-$C_4$, linear or branched;

or

**2.** A composition as claimed in claim 1 wherein the oxathiazine compound is a compound of formula (II)

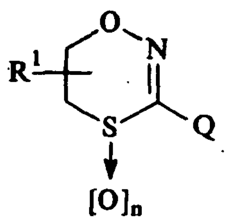

(II)

wherein n is 0, 1 or 2, $R^1$ is hydrogen, $C_1$-$C_4$ linear or branched alkyl, or benzyl; and
Q is:

(a)

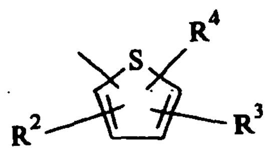

wherein $R^2$, $R^3$ and $R^4$ are, individually, hydrogen, alkyl, alkoxy, alkylthio, alkoxycarbonyl, halogen, trihalomethyl, cyano, acetyl, formyl, benzoyl, nitro, alkoxyaminomethyl, phenyl, or phenylaminocarbonyl, wherein the alkyl or alkoxy moieties are all $C_1$-$C_4$, linear or branched, with the proviso that at least one of $R^2$, $R^3$ or $R^4$ must be other than hydrogen;

(b)

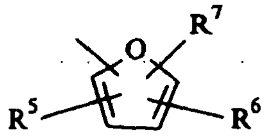

wherein $R^5$, $R^6$ and $R^7$ are, individually, hydrogen, $C_1$-$C_4$ alkoxy, $C_1$-$C_4$ alkylthio, halogen, trihalomethyl, cyano, acetyl, formyl, benzoyl, nitro, phenyl, or phenylaminocarbonyl, with the proviso that at least one of $R^5$, $R^6$ or $R^7$ must be other than hydrogen;

(c)

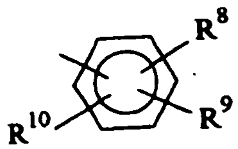

wherein $R^8$, $R^9$ and $R^{10}$ are, individually, hydroxyl, halo, $C_1$-$C_{12}$ alkyl, $C_5$-$C_6$ cycloalkyl, trihalomethyl, phenyl, $C_1$-$C_5$ alkoxy, $C_1$-$C_5$ alkylthio, tetrahydropyranyloxy, phenoxy, ($C_1$-$C_4$ alkyl) carbonyl, phenylcarbonyl, $C_1$-$C_4$ alkylsulfinyl, $C_1$-$C_4$ alkylsulfonyl, carboxy or its alkali metal salt, ($C_1$-$C_4$ alkoxy)carbonyl, ($C_1$-$C_4$ alkyl)aminocarbonyl, phenylaminocarbonyl, tolylaminocarbonyl, morpholinocarbonyl, amino, nitro, cyano, dioxolanyl, or ($C_1$-$C_4$ alkoxy)iminomethyl; or

(d)

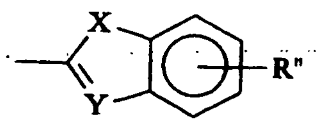

wherein X is oxygen or sulfur; Y is nitrogen, -CH-, or -C($C_1$-$C_4$ alkoxy)-; and R" is hydrogen or $C_1$-$C_4$ alkyl.

**3.** A composition as claimed in claim 2 wherein the oxathiazine compound is selected from 3-(benzo[b]thien-2-yl)-5,6-dihydro-1,4,2-oxathiazine 4-oxide and 5,6-dihydro-3-(2-thienyl)-1,4,2-oxathiazine, 4-oxide.

**4.** A composition as claimed in any one of claims 1 to 3 wherein the triazole compound is selected from the group comprising tebuconazole, propiconazole, azaconazole, hexaconazole, difenaconazole, cyproconazole, bromuconazole, epoxiconazole, metconazole, triticonazole, fenbuconazole, flusilazole,

(b)

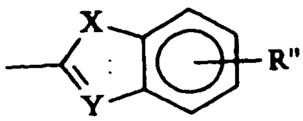

wherein X is oxygen or sulfur; Y is nitrogen, -CH-, or -C($C_1$-$C_4$ alkoxy)-; and R" is hydrogen or $C_1$-$C_4$ alkyl; plus

(ii) a triazole compound selected from compounds of formula (A):

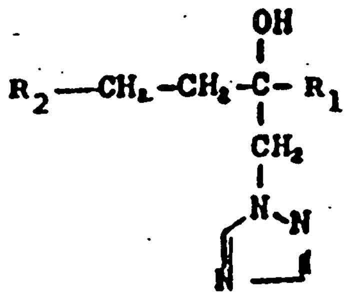

(A)

wherein $R_1$ represents a branched or straight chain $C_{1-5}$ alkyl group and $R_2$ represents a phenyl group optionally substituted by one or more substituents selected from halogen atoms or $C_{1-3}$ alkyl, $C_{1-3}$ alkoxy, phenyl or nitro groups; compounds of formula (B) :

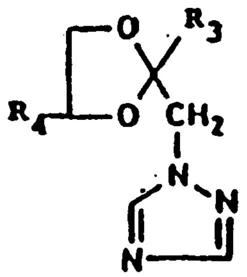

(B)

wherein $R_3$ is as defined for $R_2$ above and $R_4$ represents a hydrogen atom or a branched or straight chain $C_{1-5}$ alkyl group; and cyproconazole, hexaconazole difenaconazole, bromuconazole, epoxiconazole, flusilazole, hexaconazole, Metconazole, penconazole, tetraconazole and triticonazole; wherein the weight ratio of the oxathiazine compound to the triazole compound is between 50:1 and 1:2. tetraconazole and penconazole.

**5.** A composition as claimed in any one of the preceding claims which further comprises a quaternary ammonium compound.

**6.** A composition as claimed claim 5 wherein the quaternary ammonium compound is selected from compounds of formula (III) :

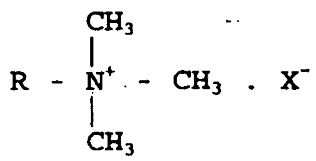

(III)

wherein R is an alkyl group having between 6 and 18 carbon atoms and $X^-$ is an anion which allows ready water solubility of the quaternary ammonium salt,
compounds of formula (IV):

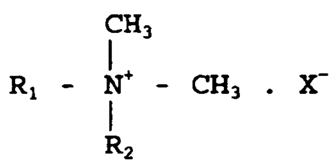

(IV)

wherein $R_1$ and $R_2$ are alkyl groups which may be the same or different and which contain between 6 and 18 carbon

atoms, and $X^-$ is an anion as described above,
compounds of formulae (V) or (VI) :

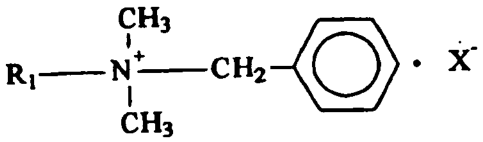

(V)

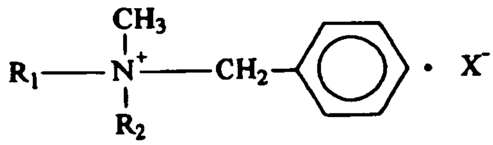

(VI)

wherein $R_1$ and $R_2$ are alkyl groups which can be the same or different and which contain between 6 and 18 carbon atoms and $X^-$ is an anion as described above,
compounds of formulae (VII) or (VIII):

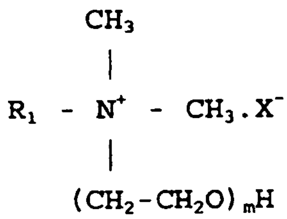

(VII)

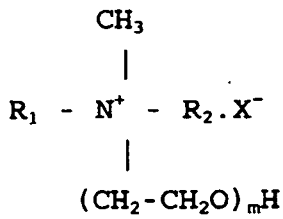

(VIII)

wherein $R_1$ and $R_2$ are alkyl groups which may be the same or different and which contain between 6 and 18 carbon atoms and wherein m is a number between 1 and 20.

**7.** A method of treating a substrate of wood, composite wood material, cellulosic material, leather, textile material, synthetic fibers, hessian, rope or cordage which comprises applying to the substrate a composition as claimed in any one of the preceding claims.

**8.** A method as claimed in claim 7 wherein the substrate is affected by or at risk of being affected by soft rot.

**9.** A method as claimed in claim 9 or claim 10 wherein the substrate is affected by or at risk of being affected by *Ascomycotina* or *Deuteromycotina.*

**10.** Use of a triazole compound as defined in claim 1 to enhance the activity of an oxathiazine as defined in claim 1 against *Ascomycotina* and *Deuteromycotina.*

**11.** A substrate of wood, composite wood material, cellulosic material, leather, textile material, synthetic fibers, hessian, rope or cordage comprising, in syngergistic proportions, an oxathiazine compound as defined in claim 1 plus a triazole compound as defined in claim 1 wherein the weight ratio of the oxathiazine compound to the triazole compound is between 50:1 and 1:2.

## Patentansprüche

**1.** Eine Konservierungsmittelzusammensetzung, enthaltend in synergistischen Verhältnissen

(i) eine Oxathiazinverbindung der Formel (I)

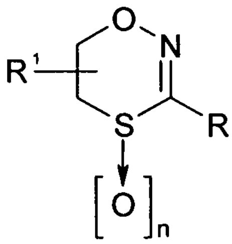

(I)

worin n 0, 1 oder 2 ist; $R^1$ Wasserstoff, unverzweigtes oder verzweigtes $C_1$-$C_4$ Alkyl oder Benzyl ist; und R

(a) Phenyl; Naphthyl; mit 1 bis 3 der folgenden Substituenten substituiertes Phenyl:

Hydroxyl, Halogen, $C_1$-$C_{12}$ Alkyl, $C_5$-$C_6$ Cycloalkyl, Trihalogenmethyl, Phenyl, $C_1$-$C_5$ Alkoxy, $C_1$-$C_5$ Alkylthio, Tetrahydropyranyloxy, Phenoxy, ($C_1$-$C_4$ Alkyl)carbonyl, Phenylcarbonyl, $C_1$-$C_4$ Alkylsulfinyl, $C_1$-$C_4$ Alkylsulfonyl, Carboxy or dessen Alkalimetallsalz, ($C_1$-$C_4$ Alkoxy)carbonyl, ($C_1$-$C_4$ Alkyl)aminocarbonyl, Phenylaminocarbonyl, Tolylaminocarbonyl, Morpholinocarbonyl, Amino, Nitro, Cyano, Dioxolanyl oder ($C_1$-$C_4$ Alkoxy)iminomethyl;

Pyridinyl; Thienyl, bevorzugt wenn n nicht 2 ist; Furanyl; oder mit 1 bis 3 der folgenden Gruppen substituiertes Thienyl oder Furanyl:

Alkyl, Alkoxy, Alkylthio, Alkoxycarbonyl, Halogen, Trihalogenmethyl, Cyano, Acetyl, Benzoyl, Nitro, Formyl, Alkoxyaminomethyl, Phenyl, oder Phenylaminocarbonyl, worin die Alkyl- oder Alkoxyeinheit unverzweigtes oder verzweigtes $C_1$-$C_4$ ist;

oder
(b)

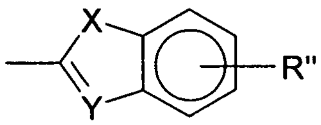

worin X Sauerstoff oder Schwefel ist; Y Stickstoff, -CH- oder -C ($C_1$-$C_4$ Alkoxy)- ist; und R'' Wasserstoff oder $C_1$-$C_4$ Alkyl ist;
ist, plus

(ii) eine Triazolverbindung ausgewählt aus Verbindungen der Formel (A):

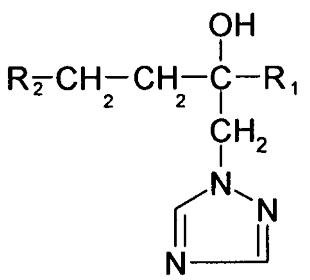

(A)

worin $R_1$ für eine $C_{1-5}$ Alkylgruppe mit verzweigter oder unverzweigter Kette steht und $R_2$ für eine Phenylgruppe steht, die gegebenenfalls mit einem oder mehreren Substituenten substituiert ist, ausgewählt aus Halogenato-

men oder $C_{1-3}$ Alkyl-, $C_{1-3}$ Alkoxy-, Phenyl- oder Nitrogruppen; Verbindungen der Formel (B):

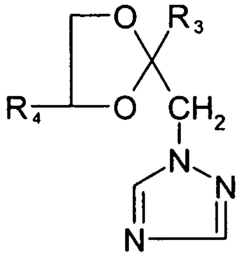

(B)

worin $R_3$ wie oben $R_2$ definiert ist und $R_4$ für ein Wasserstoffatom oder eine $C_{1-5}$ Alkylgruppe mit verzweigter oder unverzweigter Kette steht; und Cyproconazol, Hexaconazol, Difenoconazol, Bromuconazol, Epoxiconazol, Flusilazol, Hexaconazol, Metconazol, Penconazol, Tetraconazol und Triticonazol;

wobei das Gewichtsverhältnis der Oxathiazinverbindung zu der Triazolverbindung zwischen 50 : 1 und 1 : 2 beträgt.

**2.** Zusammensetzung gemäß Anspruch 1, worin die Oxathiazinverbindung eine Verbindung der Formel (II)

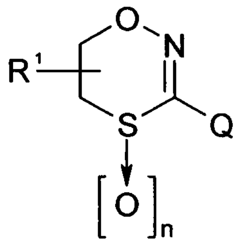

(II)

ist, wobei n 0, 1 oder 2 ist; $R^1$ Wasserstoff, unverzweigtes oder verzweigtes $C_1$-$C_4$ Alkyl oder Benzyl ist; und Q

(a)

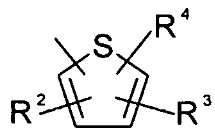

worin $R^2$, $R^3$ und $R^4$ jeweils Wasserstoff, Alkyl, Alkoxy, Alkylthio, Alkoxycarbonyl, Halogen, Trihalogenmethyl, Cyano, Acetyl, Formyl, Benzoyl, Nitro, Alkoxyaminomethyl, Phenyl oder Phenylaminocarbonyl sind, wobei alle Alkyl- oder Alkoxyeinheiten unverzweigtes oder verzweigtes $C_1$-$C_4$ sind, mit der Maßgabe, dass mindestens einer der Reste $R^2$, $R^3$ und $R^4$ nicht Wasserstoff sein darf;
(b)

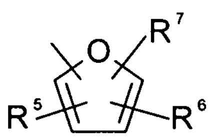

worin $R^5$, $R^6$ und $R^7$ jeweils Wasserstoff, $C_1$-$C_4$ Alkoxy, $C_1$-$C_4$ Alkylthio, Halogen, Trihalogenmethyl, Cyano, Acetyl,

Formyl, Benzoyl, Nitro, Phenyl oder Phenylaminocarbonyl sind, mit der Maßgabe, dass mindestens einer der Reste $R^5$, $R^6$ und $R^7$ nicht Wasserstoff sein darf;
(c)

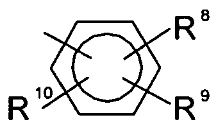

worin $R^8$, $R^9$ und $R^{10}$ jeweils Wasserstoff, Halogen, $C_1$-$C_{12}$ Alkyl, $C_5$-$C_6$ Cycloalkyl, Trihalogenmethyl, Phenyl, $C_1$-$C_5$ Alkoxy, $C_1$-$C_5$ Alkylthio, Tetrahydropyranyloxy, Phenoxy, ($C_1$-$C_4$ Alkyl)carbonyl, Phenylcarbonyl, $C_1$-$C_4$ Alkylsulfinyl, $C_1$-$C_4$ Alkylsulfonyl, Carboxy oder dessen Alkalimetallsalz, ($C_1$-$C_4$ Alkoxy)carbonyl, ($C_1$-$C_4$ Alkyl)aminocarbonyl, Phenylaminocarbonyl, Tolylaminocarbonyl, Morpholinocarbonyl, Amino, Nitro, Cyano, Dioxolanyl oder ($C_1$-$C_4$ Alkoxy)iminomethyl; oder
(d)

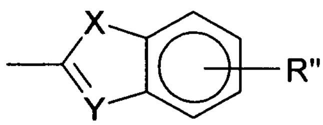

worin X Sauerstoff oder Schwefel ist; Y Stickstoff, -CH- oder -C($C_1$-$C_4$ Alkoxy)- ist; und R" Wasserstoff oder $C_1$-$C_4$ Alkyl ist;
ist.

**3.** Zusammensetzung gemäß Anspruch 2, worin die Oxathiazinverbindung ausgewählt ist aus 3-(Benzo[b]thien-2-yl)-5,6-dihydro-1,4,2-oxathiazin-4-oxid und 5,6-Dihydro-3-(2-thienyl)-1,4,2-oxathiazin-4-oxid.

**4.** Zusammensetzung gemäß einem der Ansprüche 1 bis 3, worin die Thiazolverbindung ausgewählt ist aus der Gruppe, die Tebuconazol, Propiconazol, Azaconazol, Hexaconazol, Difenoconazol, Cyproconazol, Bromuconazol, Epoxiconazol, Metconazol, Triticonazol, Fenbuconazol, Flusilazol, Tetraconazol und Penconazol umfasst.

**5.** Zusammensetzung gemäß irgendeinem der voranstehenden Ansprüche, die zusätzlich eine quaternäre Ammoniumverbindung enthält.

**6.** Zusammensetzung gemäß Anspruch 5, worin die quaternäre Ammoniumverbindung ausgewählt ist aus Verbindungen der Formel (III):

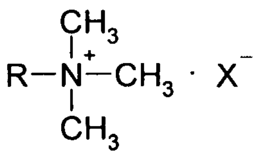
(III)

worin R eine Alkylgruppe mit zwischen 6 und 18 Kohlenstoffatomen ist und $X^-$ ein Anion ist, das es ermöglicht, das quaternäre Ammoniumsalz leicht in Wasser zu lösen,
Verbindungen der Formel (IV):

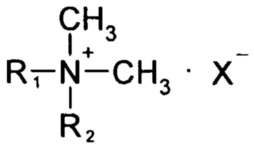 (IV)

worin $R_1$ und $R_2$ Alkylgruppen sind, die gleich oder verschieden sein können und zwischen 6 und 18 Kohlenstoffatome enthalten, und $X^-$ ein Anion ist, wie es oben beschrieben ist, Verbindungen der Formeln (V) oder (VI):

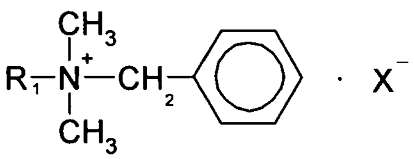

(V)

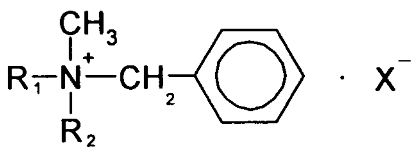

(VI)

worin $R_1$ und $R_2$ Alkylgruppen sind, die gleich oder verschieden sein können und zwischen 6 und 18 Kohlenstoffatome enthalten, und X- ein Anion ist, wie es oben beschrieben ist, Verbindungen der Formeln (VII) oder (VIII):

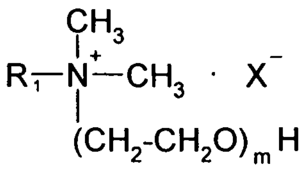

(VII)

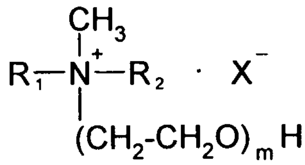

(VIII)

worin $R_1$ und $R_2$ Alkylgruppen sind, die gleich oder verschieden sein können und zwischen 6 und 18 Kohlenstoffatome enthalten, und worin m eine Zahl zwischen 1 und 20 ist.

7. Ein Verfahren zur Behandlung eines Substrats aus Holz, Holz-Verbundmaterial, zellulosehaltigem Material, Leder, Textilmaterial, synthetischen Fasern, Rupfen bzw. Sackleinen, Seil oder Tauwerk, das das Aufbringen einer Zusammensetzung gemäß irgendeinem der voranstehenden Ansprüche auf das Substrat umfasst.

8. Verfahren gemäß Anspruch 7, worin das Substrat von Weichfäule befallen ist oder in Gefahr ist, davon befallen zu werden.

9. Verfahren gemäß Anspruch 9 oder Anspruch 10, worin das Substrat von Ascomycotina oder Deuteromycotina befallen ist oder in Gefahr ist, davon befallen zu werden.

10. Verwendung einer Triazolverbindung gemäß Anspruch 1 zur Verstärkung der Wirkung eines Oxathiazins gemäß Anspruch 1 gegen Ascomycotina und Deuteromycotina.

11. Ein Substrat aus Holz, Holz-Verbundmaterial, zellulosehaltigem Material, Leder, Textilmaterial, synthetischen Fasern, Rupfen bzw. Sackleinen, Seil oder Tauwerk, das eine Oxathiazinverbindung gemäß Anspruch 1 und eine Triazolverbindung gemäß Anspruch 1 in synergistischen Verhältnissen enthält, wobei das Gewichtsverhältnis der Oxathiazinverbindung zu der Triazolverbindung zwischen 50 : 1 und 1 : 2 beträgt.

**Revendications**

**1.** Composition de conservateur comprenant, en proportions synergiques,

(i) un composé d'oxathiazine de formule (I)

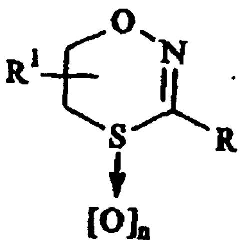

(I)

dans laquelle n est 0, 1 ou 2, $R^1$ est un hydrogène, un alkyle linéaire ou ramifié en $C_1$-$C_4$ : et R est :

(a) un phényle ; un naphtyle ; un phényle substitué avec 1 à 3 des substituants suivants :

un hydroxyle, un halogène, un alkyle en $C_1$-$C_{12}$, un cycloalkyle en $C_5$-$C_6$, un trihalogénométhyle, un phényle, un alcoxy en $C_1$-$C_5$, un alkylthio en $C_1$-$C_5$, un tétrahydropyranyloxy, un phénoxy, un (alkyle en $C_1$-$C_4$)carbonyle, un phénylcarbonyle, un alkylsulfinyle en $C_1$-$C_4$, un alkylsulfonyle en $C_1$-$C_4$, un carboxy ou son sel de métal alcalin, un (alcoxy en $C_1$-$C_4$)carbonyle, un (alkyle en $C_1$-$C_4$)aminocarbonyle, un phénylaminocarbonyle, un tolylaminocarbonyle, un morpholinocarbonyle, un amino, un nitro, un cyano, un dioxolanyle, ou un (alcoxy en $C_1$-$C_4$)iminométhyle ;
un pyridinyle ; un thiényle, de préférence lorsque n n'est pas 2 ; un furanyle ; ou un thiényle ou un furanyle substitué avec 1 à 3 des groupes suivants :

un alkyle, un alcoxy, un alkylthio, un alcoxycarbonyle, un halogène, un trihalogénométhyle, un cyano, un acétyle, un benzoyle, un nitro, un formyle, un alcoxyaminométhyle, un phényle, ou un phénylaminocarbonyle, où le fragment alkyle ou alcoxy est en $C_1$-$C_4$,
linéaire ou ramifié ;

ou

(b) 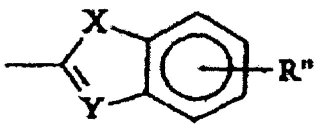

où X est un oxygène ou un soufre ; Y est un azote, -CH-, ou -C(alcoxy en $C_1$-$C_4$)- ; et R" est un hydrogène ou un alkyle en $C_1$-$C_4$ ; plus
(ii) un composé de triazole choisi parmi des composés de formule (A) :

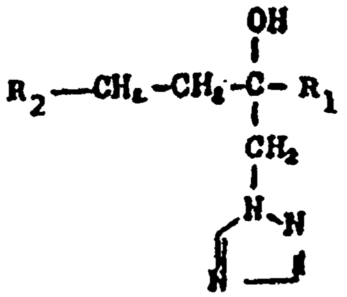

(A)

où $R_1$ représente un groupe alkyle en $C_{1-5}$ à chaîne ramifiée ou linéaire et $R_2$ représente un groupe phényle facultativement substitué par un ou plusieurs substituants choisi parmi des atomes d'halogène ou des groupes alkyle en $C_{1-3}$, alcoxy en $C_{1-3}$, phényle ou nitro ; des composés de formule (B) :

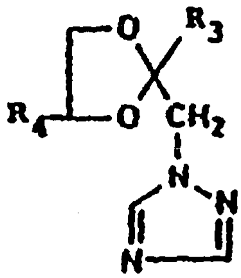

(B)

où $R_3$ est comme défini pour $R_2$ ci-dessus et $R_4$ représente un atome d'hydrogène ou un groupe alkyle en $C_{1-5}$ à chaîne ramifiée ou linéaire ; et le cyproconazole, l'hexaconazole, le difénaconazole, le bromuconazole, l'époxiconazole, le flusilazole, l'hexaconazole, le métconazole, le penconazole, le tétraconazole et le triticonazole ;
où le rapport en poids du composé d'oxathiazine au composé de triazole est compris entre 50:1 et 1:2.

**2.** Composition selon la revendication 1 dans laquelle le composé d'oxathiazine est un composé de formule (II)

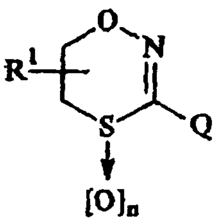

(II)

où n est 0, 1 ou 2, $R^1$ est un hydrogène, un alkyle linéaire ou ramifié en $C_1$-$C_4$, ou un benzyle ; et
Q est:

(a) 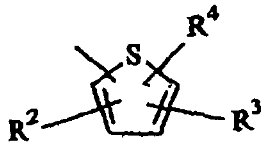

où $R^2$, $R^3$ et $R^4$ sont, individuellement, un hydrogène, un alkyle, un alcoxy, un alkylthio, un alcoxycarbonyle, un halogène, un trihalogénométhyle, un cyano, un acétyle, un formyle, un benzoyle, un nitro, un alcoxyaminométhyle, un phényle, ou un phénylaminocarbonyle, où les fragments alkyle ou alcoxy sont tous en $C_1$-$C_4$, linéaires ou ramifiés, à condition qu'au moins un parmi $R^2$, $R^3$ ou $R^4$ doit être différent de l'hydrogène ;

(b) 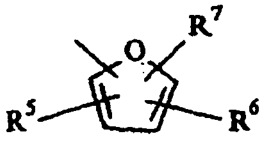

où $R^5$, $R^6$ et $R^7$ sont, individuellement, un hydrogène, un alcoxy en $C_1$-$C_4$, un alkylthio en $C_1$-$C_4$, un halogène, un trihalogénométhyle, un cyano, un acétyle, un formyle, un benzoyle, un nitro, un phényle, ou un phénylaminocarbonyle à condition qu'au moins un parmi $R^5$, $R^6$ ou $R^7$ doit être différent de l'hydrogène ;

(c) 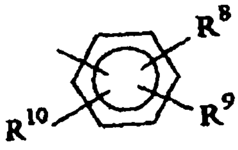

où $R^8$, $R^9$ et $R^{10}$ sont, individuellement, un hydroxyle, un halogène, un alkyle en $C_1$-$C_{12}$, un cycloalkyle en $C_5$-$C_6$, un trihalogénométhyle, un phényle, un alcoxy en $C_1$-$C_5$, un alkylthio en $C_1$-$C_5$, un tétrahydropyranyloxy, un phénoxy, un (alkyle en $C_1$-$C_4$)carbonyle, un phénylcarbonyle, un alkylsulfinyle en $C_1$-$C_4$, un alkylsulfonyle en $C_1$-$C_4$, un carboxy ou son sel de métal alcalin, un (alcoxy en $C_1$-$C_4$)carbonyle, un (alkyle en $C_1$-$C_4$)aminocarbonyle, un phénylaminocarbonyle, un tolylaminocarbonyle, un morpholinocarbonyle, un amino, un nitro, un cyano, un dioxolanyle, un ou (alcoxy en $C_1$-$C_4$)iminométhyle ; ou

(d) 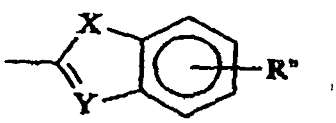

où X est un oxygène ou un soufre ; Y est un azote, -CH-, ou -C(alcoxy en $C_1$-$C_4$)- ; et R" est un hydrogène ou un alkyle en $C_1$-$C_4$.

**3.** Composition selon la revendication 2 dans lequel le composé d'oxathiazine est choisi parmi le 4-oxyde de 3-(benzo [b]thién-2-yl)-1,4,2-oxathiazine et le 4-oxyde de 5,6-dihydro-3-(2-thiényl)-1,4,2-oxathiazine.

4. Composition selon l'une quelconque des revendications 1 à 3 dans laquelle le composé de triazole est choisi dans le groupe comprenant
le tébuconazole, le propiconazole, l'azaconazole, l'hexaconazole, le difénaconazole, le cyproconazole, le bromuconazole, l'époxiconazole, le métconazole, le triticonazole, le fenbuconazole, le flusilazole, le tétraconazole et le penconazole.

5. Composition selon l'une quelconque des revendications précédentes qui comprend, en outre, un composé d'ammonium quaternaire.

6. Composition selon la revendication 5 dans laquelle le composé d'ammonium quaternaire est choisi parmi des composés de formule (III) :

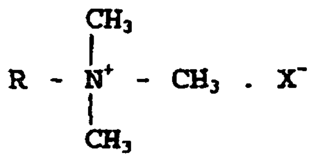

(III)

dans laquelle R est un groupe alkyle ayant entre 6 et 18 atomes de carbone et X- est un anion qui permet la solubilité libre dans l'eau du sel d'ammonium quaternaire,
des composés de formule (IV) :

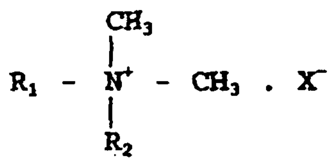

(IV)

où $R_1$ et $R_2$ sont des groupes alkyle qui peuvent être identiques ou différents et qui contiennent entre 6 et 18 atomes de carbone, et X- est un anion comme décrit ci-dessus.
des composés de formule (V) ou (VI) :

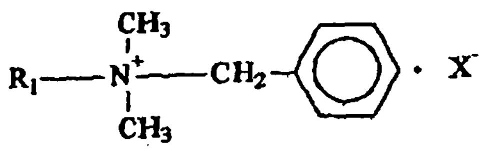

(V)

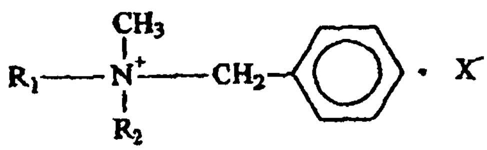

(VI)

où $R_1$ et $R_2$ sont des groupes alkyle qui peuvent être identiques ou différents et qui contiennent entre 6 et 18 atomes de carbone et X- est un anion comme décrit ci-dessus,
des composés de formule (VII) ou (VIII) :

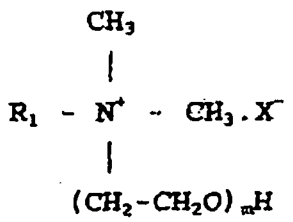

(VII)

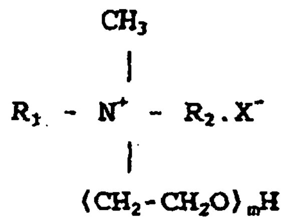

(VIII)

où $R_1$ et $R_2$ sont des groupes alkyle qui peuvent être identiques ou différents et qui contiennent entre 6 et 18 atomes de carbone et où m est un nombre entre 1 et 20.

**7.** Procédé de traitement d'un substrat de bois, de matériau composite de bois, de matériau cellulosique, de cuir, de matériau textile, de fibres synthétiques, d'hessian, de corde ou de cordage qui comprend l'application sur le substrat d'une composition selon l'une quelconque des revendications précédentes.

**8.** Procédé selon la revendication 7 dans lequel le substrat est affecté par ou présente un risque d'être affecté par la pourriture molle du bois.

**9.** Procédé selon la revendication 9 ou la revendication 10 dans lequel le substrat est affecté par ou présente un risque d'être affecté par des ascomycètes ou des deutéromycètes.

**10.** Utilisation d'un composé de triazole comme défini dans la revendication 1 pour augmenter l'activité d'une oxathiazine comme définie dans la revendication 1 contre les ascomycètes et les deutéromycètes.

**11.** Substrat de bois, matériau composite de bois, matériau cellulosique, cuir, matériau textile, fibres synthétiques, hessian, corde ou cordage comprenant, en proportions synergiques, un composé d'oxathiazine comme défini dans la revendication 1 plus un composé de triazole comme défini dans la revendication 1 où le rapport en poids du composé d'oxathiazine au composé de triazole est compris entre 50:1 et 1:2.

FIG. 1

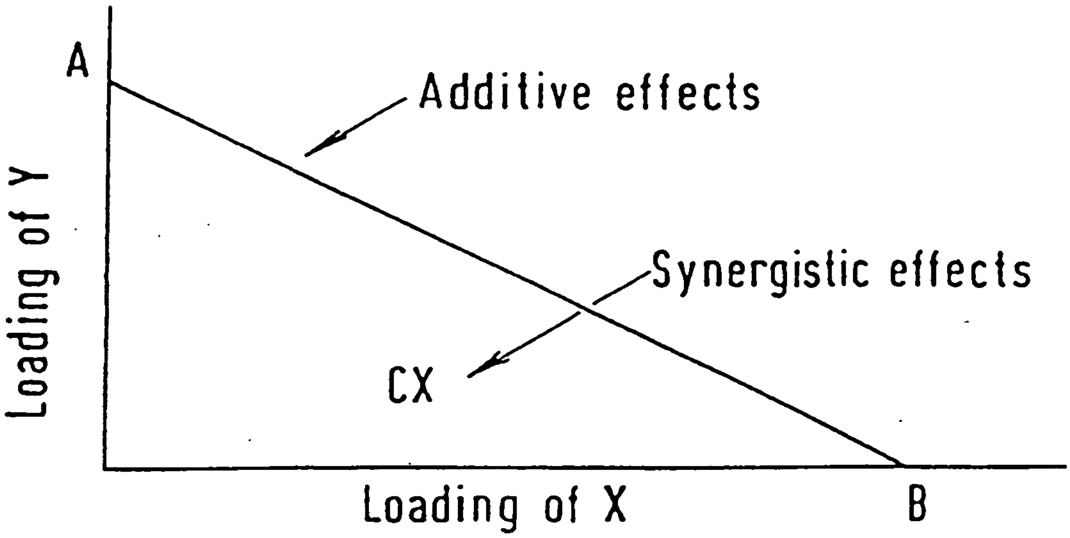
A
Additive effects
Loading of Y
Synergistic effects
CX
Loading of X
B

Figure 2

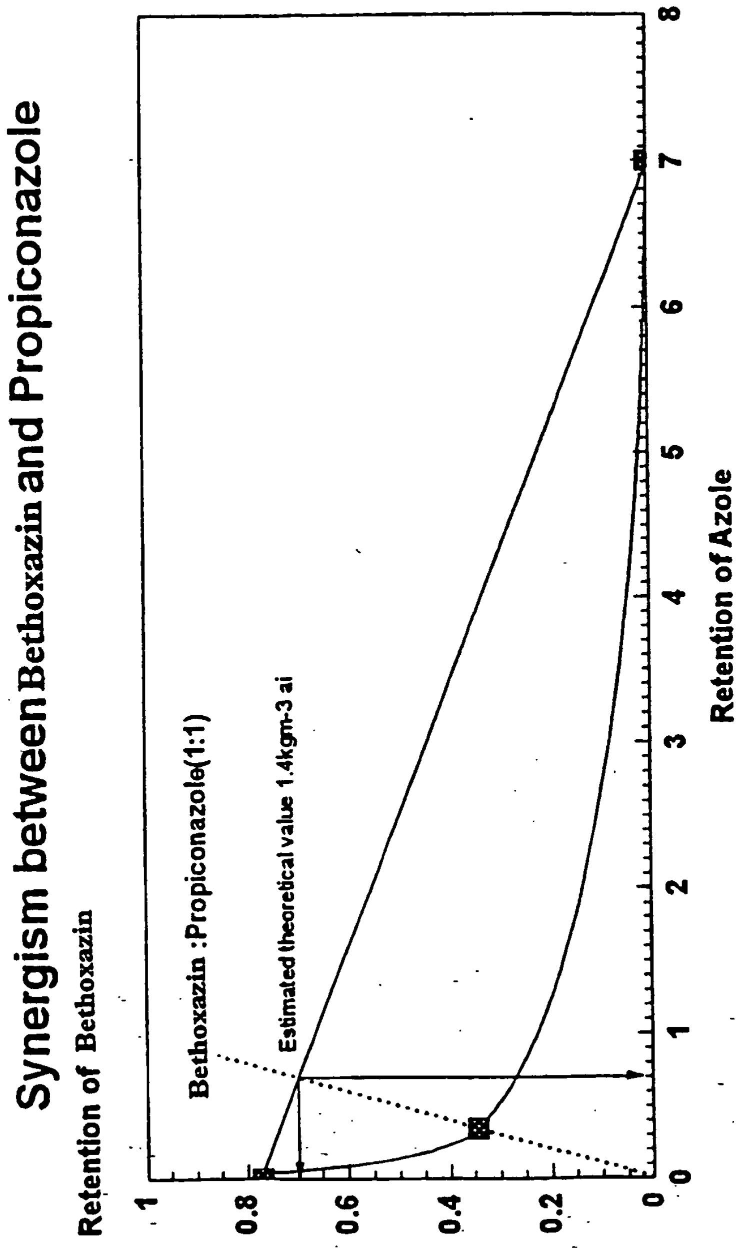
Synergism between Bethoxazin and Propiconazole
Retention of Bethoxazin
Bethoxazin :Propiconazole(1:1)
Estimated theoretical value 1.4kgm-3 ai
Retention of Azole
1
0.8
0.6
0.4
0.2
0
0
1
2
3
4
5
6
7
8

Figure 3

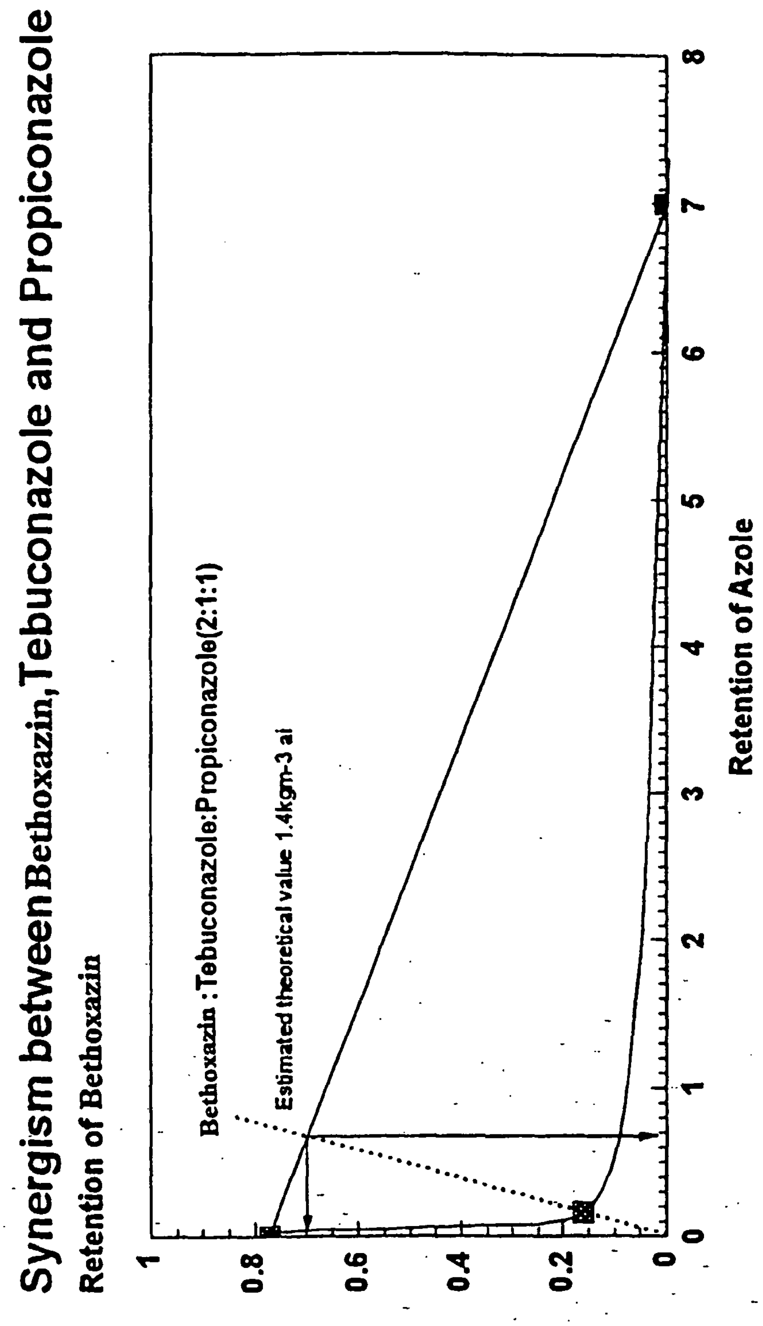

Synergism between Bethoxazin, Tebuconazole and Propiconazole
Retention of Bethoxazin
1
0.8
0.6
0.4
0.2
0
Bethoxazin :Tebuconazole:Propiconazole(2:1:1)
Estimated theoretical value 1.4kgm-3 ai
0
1
2
3
4
5
6
7
8
Retention of Azole

Figure 4

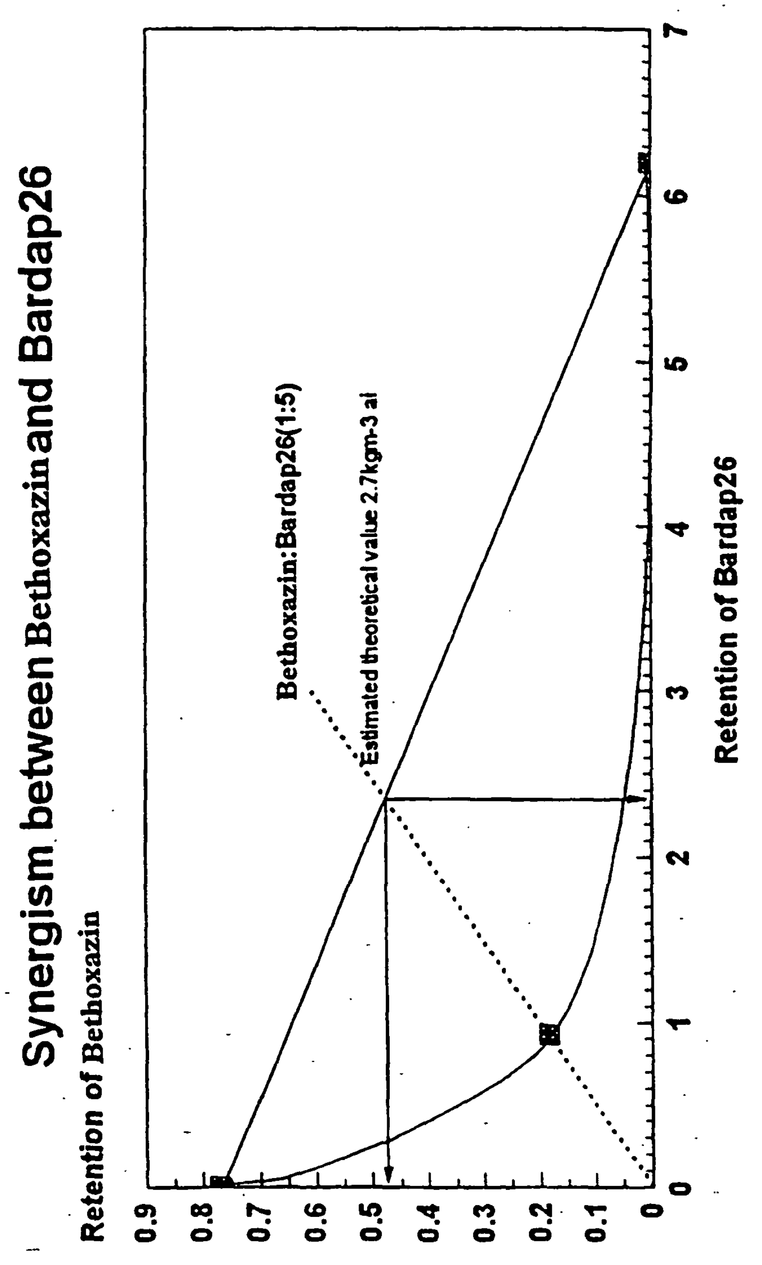
Synergism between Bethoxazin and Bardap26
Retention of Bethoxazin
0.9
0.8
0.7
0.6
0.5
0.4
0.3
0.2
0.1
0
0
1
2
3
4
5
6
7
Retention of Bardap26
Bethoxazin:Bardap26(1:5)
Estimated theoretical value 2.7kgm-3 ai

Figure 5

**Synergism between Bardap26, Bethoxazin and Cyproconazole**

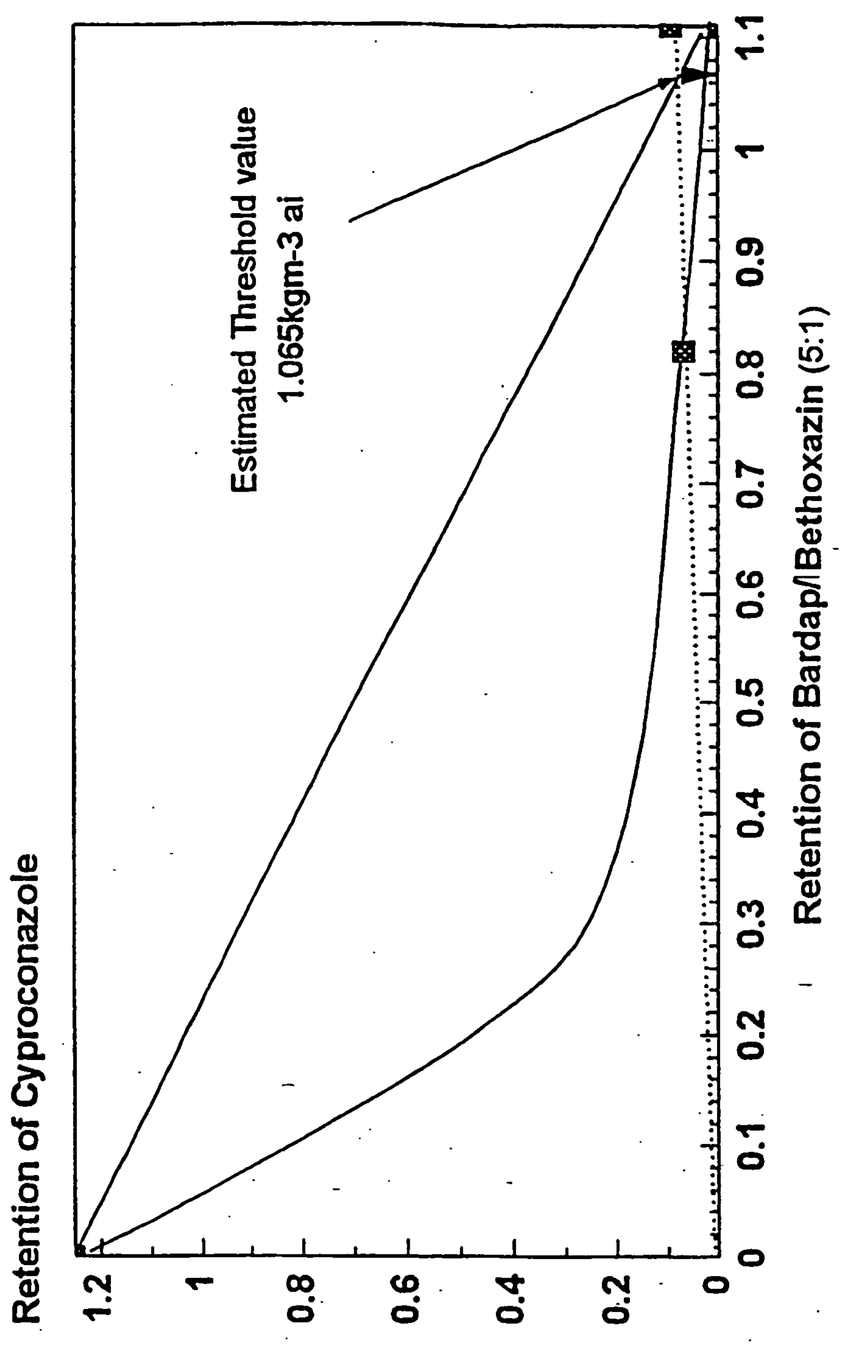

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9506043 A